(19) **Europäisches Patentamt**

**European Patent Office**

**Office européen des brevets**

(11) **EP 0 745 559 B1**

(12) **EUROPEAN PATENT SPECIFICATION**

(45) Date of publication and mention
of the grant of the patent:
**07.08.2002   Bulletin 2002/32**

(51) Int Cl.[7]: **C01B 33/38**

(21) Application number: **96108391.2**

(22) Date of filing: **25.05.1996**

(54) **A process for preparing crystalline sodium disilicate having a layered structure**

Verfahren zur Herstellung eines kristallinen Natriumdisilikats mit Schichtstruktur

Procédé de préparation d'un disilicate de sodium cristallin à structure en couches

(84) Designated Contracting States:
**DE FR GB IT**

(30) Priority:  **29.05.1995   KR 9513679**

(43) Date of publication of application:
**04.12.1996   Bulletin 1996/49**

(73) Proprietor: **KOREA RESEARCH INSTITUTE OF CHEMICAL TECHNOLOGY**
**Daejeon, 305-343 (KR)**

(72) Inventors:
 • **Lee, Jung Min**
   **Yusung-ku, Taejon (KR)**
 • **Suh, Jeong Kwon**
   **Yusung-ku, Taejon (KR)**
 • **Jeong, Soon Yong**
   **Seo-ku, Taejon (KR)**
 • **Jin, Hang Kyo**
   **Yusung-ku, Taejon (KR)**
 • **Park, Byung Ki**
   **Yusung-ku, Taejon (KR)**
 • **Park, Chun Hee**
   **Kangnam-ku, Seoul (KR)**
 • **Park, Jeong Hwan**
   **Eunpyung-ku, Seoul (KR)**
 • **Kim, Jong An**
   **Yangsan-gun, Kyungsangnam-do (KR)**
 • **Lim, Chang Whan**
   **Seo-ku, Taejon (KR)**

(74) Representative: **Weber, Dieter, Dr. et al**
   **Weber, Seiffert, Lieke**
   **Taunusstrasse 5a**
   **65183 Wiesbaden (DE)**

(56) References cited:
   **EP-A- 0 164 552**      **EP-A- 0 293 640**
   **EP-A- 0 436 835**      **DE-A- 4 323 527**

 • **PATENT ABSTRACTS OF JAPAN vol. 17, no. 1 (C-1014), 5 January 1993 & JP-A-04 238809 (NIPPON CHEM IND CO LTD), 26 August 1992,**

EP 0 745 559 B1

**Description**

BACKGROUND OF THE INVENTION

Field of the Invention

The present invention relates to a process for preparing crystalline sodium disilicate having a layered structure, in particular to a simple process for preparing layered sodium disilicate by adding a small amount of water directly to cullet powder in which the molar ratio of $Na_2O$ to $SiO_2$ is 1.80 to 2.20, as starting material to synthesize granules and introducing the granules into a rotary calcination kiln to be calcined.

As a result, in comparison with the prior process, the purity of the product is increased, the processes for preparation are simplified, consumption of energy is reduced remarkably, whereby cost of the product is reduced and also deposition of reactants in the apparatus is improved. Crystalline layered sodium disilicate, so obtained, is suitable as a water softener and for use in detergent compositions.

Description of the Prior Art

"Cullet" which is used as the starting material of the present invention, is generally used as a raw material in manufacturing water-glass solution. It is formed by mixing sand and sodium carbonate in a suitable molar ratio (the ratio of $SiO_2$ to $Na_2O$). The resulting mixture is melted at a high temperature of 1000— 1300 °C and cooled, thus giving a compound consisting of small mass and fragments of amorphous sodium silicate in the form of cullet, which can be used in the present invention.

Layered sodium silicate is expressed by the formula as $(Na_2O)_x(SiO_2)_y$ (wherein, the ratio of y to x, y/x depends on the crystal structure, and has values of 2 to 11). Layered crystalline sodium disilicate is expressed by the chemical formula of $Na_2Si_2O_5$ and was disclosed as crystallographic $\alpha$, $\beta$, y and $\delta$-$Na_2Si_2O$ 5 until now.

Due to the structural property, said layered crystalline sodium disilicate is remarkable in its adsorption properties and ion-exchange capacity, therefore it has various applications in chemical processes such as separation and refining processes and the like and as a catalyst support. Especially, the $\delta$-type layered crystalline sodium disilicate has a high binding capacity for the hardness constituents $Ca^{2+}$ and $Mg^{2+}$ in water. It has been developed as a water softener and aid for detergent and has a variety of uses.

A typical process for synthesizing $\delta$-type $Na_2Si_2O_5$ was disclosed in U.S. patent No. 4,585,642 and European patent No. 293,640. The process comprises adjusting a molar ratio of $SiO_2$ : $Na_2O$ to 1.9 : 1 through 2,5 : 1 using aqueous solutions of sodium silicate and sodium hydroxide, dehydrating the mixed solution using a spray-dryer, and then crystallizing said dehydrated material at a temperature of 550 $\sim$ 800 °C.

In the above-mentioned process, aqueous sodium silicate solution, which is more expensive than anhydrous sodium silicate per unit price, is used. Furthermore, an enormous amount of energy is consumed to remove a large amount of moisture from the aqueous sodium silicate solutions. Also since the said dehydrated sodium silicate has a very large volume the size of the crystallization apparatus should be large and a large amount of dust generated during the process causes a bag filter to be heavily loaded.

Furthermore, in the early stage of crystallization in said process, severe foaming occurs because of escape of the residual moisture. It is followed by sintering and contracting between particles, whereby the resulting reactants are deposited inside the crystallization apparatus. Therefore it proved to be an adverse factor in consecutive processes.

Japanese Unexamined Patent Publication No. Heisei 4-238809 discloses that aqueous sodium silicate solution with a molar ratio of $SiO_2/Na_2O$ of 1.9 : 1 through 3.2 : 1 is introduced directly into the heating section in the temperature range of 680 to 830 °C for crystallization. As a result, the process for preparation is simplified. In said process, however, energy is consumed excessively, because of the generation of a large amount of vapor in the dehydrating process at high temperature. The crystallization apparatus corrodes easily and there is a problem that the reactants are deposited inside the apparatus when sudden shut-down occurs.

Japanese Unexamined Patent Publication No. Heisei 3-93649 discloses that anhydrous sodium silicate is prepared by adding part of an alumina constituent for improving water-resistance. It is pulverized and crystallized to improve the layer-like structure. Also in this process a large amount of impurities is present and particles are sintered to each other.

The flow diagram in figure 2 illustrates the three patents such as U.S. patent No. 4,585,642, 5,211,930 and 5,268,156 which are now discussed:

The first step in this process is a heating and dissolving step ($\Delta$) which comprises adding a large amount of water to the cullet thereby preparing a water glass solution (water content: 50 - 60 wt%) followed by heating and dissolving. The second step is a drying step ($\Delta$) which comprises adding sodium hydroxide to adjust the molar ratio ($SiO_2/Na_2O$) as desired and drying by using spray drying device in the temperature range of above 140 °C. The third step is calcination (Δ) which comprises calcining the intermediate product of powder phase at a temperature in the range 600 ~ 800 °C in the rotary kiln. U. S. patent No. 4,586,642 discloses a process of adding seed corresponding to δ-type disilicate as starting material in order to prepare selectively δ-type layered crystalline sodium disilicate and to prevent the resulting product from being mixed with various type of layered crystalline sodium disilicates (for example, α, β, γ and δ-type). U.S. patent 5,211,930 discloses recycling the final product to prevent the deposition of reactants inside the calcination apparatus. The U.S. patent No. 5,268,156 discloses a method of increasing the bulk density by grinding to a particle size of 1 to 50 μm to prevent deposition of reactants and dust generation within the calcination apparatus.

However, considering the complexity of the process and apparatus of the prior art, it can be seen that the energy consumption caused by heating, drying and calcination is high. This process also has the disadvantage of having to maintain the quality of the final product. Therefore it has large economic disadvantages, since much equipment is required. Another problem is that the overall manufacturing route has complex multi-steps.

As an example of the prior art with regard to the manufacturing method of another layered crystalline sodium disilicate, the U.S. patent No. 5,183,651 discloses a process as illustrated in Figure 3 that demonstrates a method to reduce remarkably the energy cost and a device for a simple manufacturing process, in comparison with manufacturing process involving complex multi-steps (stage I: heating, dissolving process, stage II: drying dehydration process, stage III: crystallization process, stage IV: seeding process or recycle process or crushing process) leading appointed to disadvantages in the above mentioned prior art preparation. Contrary to the present invention which obtains δ-sodium disilicate, the major purpose is to generate α-type layered crystalline sodium disilicate. In the prior art preparation, it was considered as a manufacturing process with economic advantages to obtain layered crystalline sodium disilicate by a simplified manufacturing process involving grinding cullet fragments and calcining directly them with only a small scale apparatus required. However, the majority of the final product is α-type layered crystalline sodium disilicate. The process also has to recycle the final product. As illustrated in the U.S. patent No. 4,820,439 (page 8, column 58, example 14 of table 8) and said Japanese Unexamined Patent Publication No. Heisei 04-238809 (page 4, column 34, comparative example 2), the binding capacity of final product with respect to hardness constituents in water is much lower than that of δ-type layered crystalline sodium disilicate. Therefore the final product of said prior art cannot be used wholly as a water softener or a component for detergents.

Therefore, the inventors have made efforts to prepare a high purity δ-type layered sodium disilicate which is suitable as a component of detergent composition and water softener. In addition, this invention has eliminated manufacturing processes with complex multi-steps as in the said prior art and the costly disadvantages due to the resulting high energy consumption. As a result, we have developed a new process comprising a remarkably simplified stage I of clacination in the overall manufacturing route by using cullet powder in which the molar ratio was adjusted in advance to facilitate the phase transition to the δ-type, adding a small amount of water to prepare granules with suitable particle size in calcination, calcining prepared granules by directly introducing them into a rotary calcination kiln.

SUMMARY OF THE INVENTION

An object of the present invention is to provide a process for preparation of a layered crystalline sodium disilicate obtained by simplifying the process remarkably. It can reduce the cost due to energy consumption, therefore lowering the cost per unit is possible.

Another object of the present invention is to prepare a layered crystalline sodium disilicate having a δ-crystalline structure.

Description of the Drawings

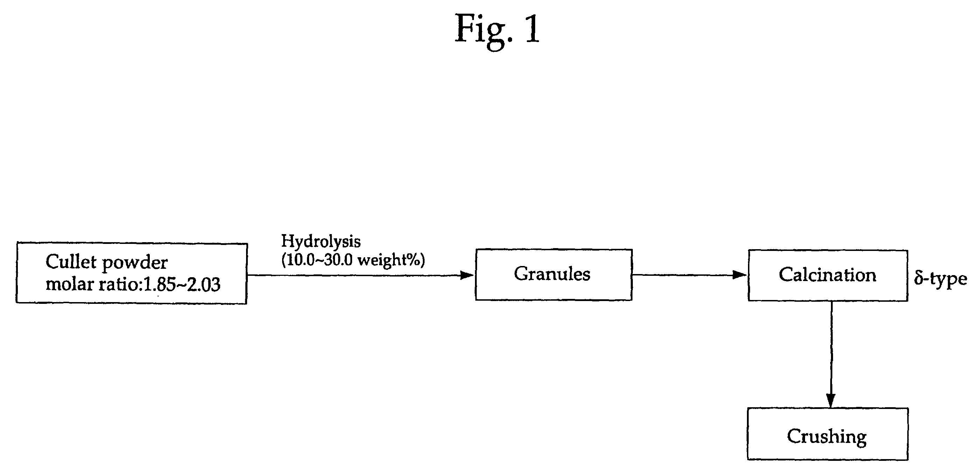

Fig. 1 is a flow diagram representing schematically the preparation of layered crystalline sodium disilicate in accordance with the present invention and,

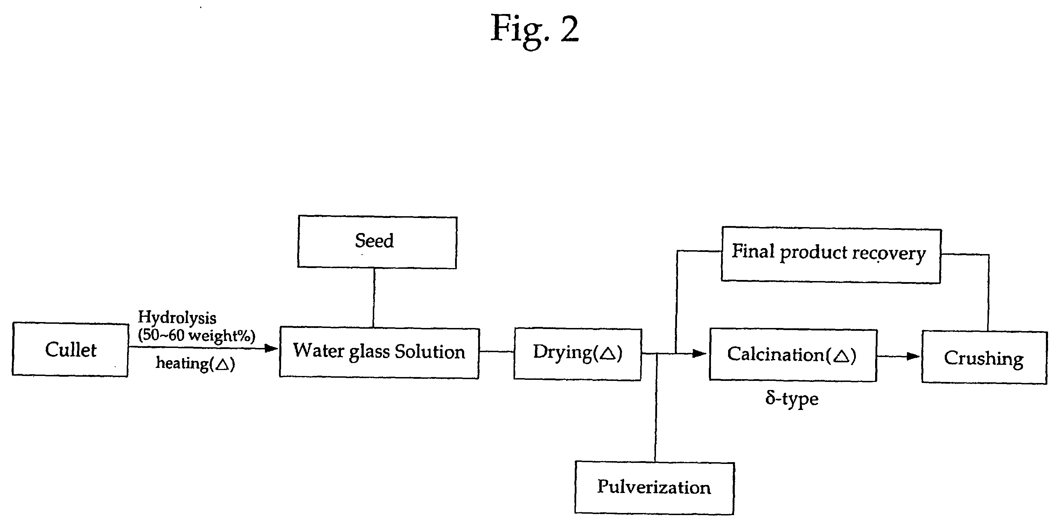

Fig. 2 is a flow diagram representing schematically the preparation of layered crystalline sodium disilicate in accordance with the prior art and,

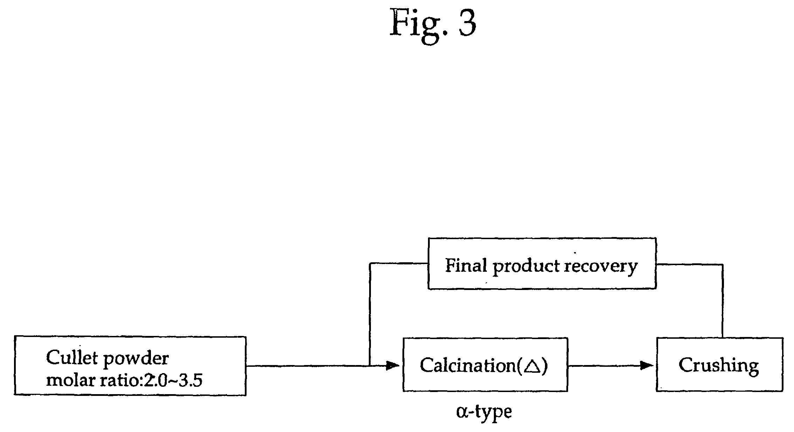

Fig. 3 is a flow diagram representing schematically the preparation of layered crystalline sodium disilicate in accordance with another prior art document and,

Fig. 4 is a X-ray diffraction pattern of the sample synthesized by example 1 of the present invention.

Detailed Description of the Invention

The present invention is characterized in preparing a layered crystalline sodium disilicate by heating, melting a mixture of sand and sodium carbonate and preparing cullet having a molar ratio of $SiO_2/Na_2O$ between 1.80 to 2.20. The cullet mass is ground to $40 \sim 200$ µm particle size. Water, 10 to 30.0 % by weight, is added thereto and the mixture is granulated to give a granule size of 1 to 50 mm size followed by calcining and crushing.

The present invention is described in more detail as follows:

The present invention relates to a process for preparing layered sodium disilicate by using cullet powder comprising a constant composition constituent as the starting material, adding a suitably small amount of water which is only required in granulation, and directly calcining the resulting granules. Through this simplified process crystalline $\delta$-$Na_2Si_2O_5$ is obtained, which is suitable as a water softener and components of detergents. First, cullet is prepared by mixing sand and sodium carbonate, melting at $1000 \sim 1300$ °C for $1 \sim 3$ hrs and cooling. The molar ratio of $SiO_2/Na_2O$ is $1.80 \sim 2.20$. Herein, if the molar ratio of $SiO_2/Na_2O$ exceeds the above range, it is difficult to prepare the final product of 8-type layered crystalline sodium disilicate.

The prepared cullet is pulverized to a particle size of 40 to 200 µm. If the particle size is more than this range, the time required for high temperature energy to penetrate into the prepared granules is long which slows the calcination (crystallization).Therefore it is difficult for the desired product to be calcined and the physical properties become poor.

10.0 to 30.0 % by weight of water as binder is added in order to fabricate pulverized cullet powder, which is then introduced into a rotating pan type granulator or a tableting type granulator and is granulated to give a granule size of 1 to 50 mm (bulk density : $1.1 \sim 1.6$ g/cm$^3$). The granulators can be selected from rotating drum types, extruder types, fluidized bed types including the above-mentioned types.

Hence, if the amount of water is less than the above range, there is insufficient binding. If the amount of water is more than the above range, the problem arises that high temperature energy cannot penetrate into the granules uniformly within a short time.

The resulting granules are introduced into a rotary kiln, a consecutive calcination device, and are calcined at 650 to 770 °C for 0.3 to 1.0 hours. They are crushed to give the desired high quality $\delta$-type layered crystalline sodium disilicate.

According to the present invention, the components of the cullet as starting material are in the above mentioned particular range and $\delta$-type layered crystalline sodium disilicate is largely obtained in the final product. After it is pulverized to proper particle size, a small amount of water is added. Therefore, we can adapt the new process entirely and simply to obtain the desired product with excellent physical properties as far as the calcination of granules is concerned. Particularly, the mechanism and role of a small amount of water added in the present invention differ from those of water in the process route of the prior art. That is, it plays a major role in granulating pulverized cullet powder efficiently, as well as the improvement of friability and purity in terms of uniform crystal and pore formation including removal of water in calcination. The necessary minimum amount of water provides not only little adverse effect within the apparatus or in physical properties after manufacture, but also greatly shortens the process.

That is, in the stage II step, excess water glass-containing water $50 \sim 60$ % by weight is dehydrated using a spray-dryer in the prior art, and then calcined. But water contained within granules in the present invention can facilitate penetration of the high temperature energy uniformly in the core of the granules within a short time, by being eliminated in the early phase of the calcination process very easily. The granules of suitable form can achieve the desired high quality product through instant uniform calcination in the rotary kiln. Moreover, the present invention comprises new features, such as preventing deposition of the product during calcination with the multistep process.

Therefore, the layered crystalline sodium disilicate prepared through the above mentioned process of this invention has calcium ion binding capacity of $87.0 \sim 105.0$ mg $Ca^{2+}$/g and magnesium ion binding capacity of $73.0 \sim 85.0$ $Mg^{2+}$/g at 25 °C, which is superior to that prepared by the prior art and the crystal phase is largely 8-type therefore it has very useful properties.

The effect of the present invention is summarized as follows.

Firstly cullet powder is used as a staring material (molar ratio of $SiO_2$ to $Na_2O$ of 1.80 to 2.20) which influencies the purity of the final product. The minimum necessary amount of water for granulation is added and the granulated cullet powder is directly calcined. Through this simplified process, the crystalline $\delta$-$Na_2Si_2O_5$, so obtained, is suitable for water softener and components of detergents.

Secondly the process is simplified there is no need for apparatus for heating, dissolving, drying. or recycling. The energy costs and overall process time are reduced. Therefore, by reducing the cost per unit the productivity is improved.

Thirdly using selected raw materials and simple manufacturing method, each step is easily controlled and the granulated particles are crystallized in equal size in the rotary kiln. Thus, there is no deposition in the inner wall of the rotary kiln and the particle sintering is also inhibited. So crystalline layered sodium disilicate ($\delta$-type), being suitable for a detergent composition or as water softener with good friability and high purity can be obtained.

The following examples serve to illustrate the present invention, such examples are given for the purpose of illustration and not for purposes of limiting the present invention.

### Example 1

600g of sand (made in Australia, Cape Carpentry) dried at 120 °C for 5 hrs and 531.9 g of sodium carbonate (Sweden, Solvay Co., Ltd.) dried at 350 °C for 5 hrs were measured, crushed and mixed in a ball-mill (Jar; Alumina, Capacity; 3.6 l, Ball; Ø 20 mm) for 1 hour. 1 kg of the mixture was then introduced into an alumina crucible and melted at 1200 °C for 2 hrs in an electric furnace (U. S. A., Thermoline Co., Model 46200) and was cooled to room temperature. 700 g of clear cullet mass.was obtained. The molar ratio of 2.03 (the ratio of $SiO_2$ to $Na_2O$) was identified by liquid sodium disilicate analysis method (KS-M-1415).

After this mass was ground to small fragments first in the Jaw crusher (Korea, DaeGa Powtech, Co.), it was pulverized in a ball mill (Jar; Alumina, Capacity; 3.6 l, Ball; Ø 20 mm for 3 hours, meshed to a cullet powder with particle size of 43 to 185 $\mu$m (bulk density: 0.5 $\sim$ 0.6 g/cm$^3$, ignition loss of 0.40 % by weight at 700 °C) and then 500 g of the sample was measured and introduced into a rotating pan type granulator (Young jin machine Co., Korea). The apparatus was operated at a rate of 90 rpm to give a diameter of 3 to 30 mm for the spherical particles so that the amount of water added should be 15.0 % by weight A small portion of distilled water was dropped in to form granules (bulk density: 1.31 g/cm$^3$).

These granules were introduced into rotary calcination kilns at 725 °C under ambient atmosphere (U.S.A., Lindberg Co. Model 54579) and calcined at an angle of inclination of 0.5° and at a rate of 8 rpm for 20 mins. In this process there is no deposition of the products on the internal wall of the rotary tube kiln and 498 g of the white porous product was obtained. The bulk density was expanded by 0.26 g/cm$^3$ maintaining the morphology of the initial granules without variation.

After it was crushed and meshed to a particle size of 43 to 104 $\mu$m in a ball-mill for 30 mins the binding capacity for hardness constituents was measured and the crystallinity was examined by X-ray diffraction analysis equipment (Japan, Rigaku Co., D/MAX-3B). The binding capacity of hardness constituents and the crystal phase of the resulting final product are illustrated in table 1, which shows excellent binding capacity for hardness constituents. The crystal phase is largely $\delta$-$Na_2Si_2O_5$.

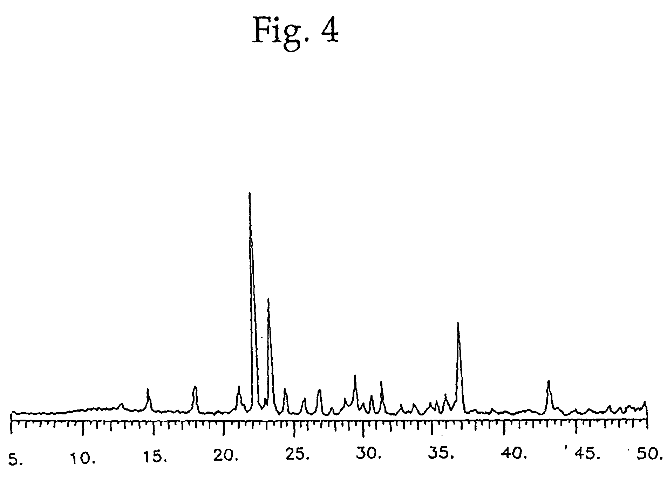

X-ray diffraction characteristics of this sample are shown in table 3. The X-ray diffraction pattern is shown in figure 4.

### Example 2

600 g of sand treated as in example 1 and 554.1 g of sodium carbonate were measured. The obtained cullet (molar ratio 1.95) was treated as in example 1. The crystal phase and the binding capacity of the hardness constituents of the final product obtained through granulation and calcination under the same conditions as example 1 are shown in the following table 1.

### Example 3

600 g of sand treated under the same conditions as in the above example 1 and 582.8 g of sodium carbonate were measured. Using cullet (molar ratio 1.85) obtained with the same treatment as in example 1, the crystal phase and the binding capacity for hardness constituents in the final product obtained through granulation and calcination as in example 1 were measured and are shown in the following table 1.

### Example 4

Distilled water, 10.0 % by weight, was added to 500 g of cullet powder obtained as in example 1. Granules were prepared under the same conditions as in example 1. The crystal phase and binding capacity for hardness constituents of the final product, obtained as in example 1 were measured and are shown in the following table 1.

### Example 5

500 g of cullet powder was obtained as in example 2. The crystal phase and binding capacity for hardness constituents in the final product, which was obtained under the same conditions as example 4, were measured and are shown in the following table 1.

### Example 6

500 g of cullet powder was obtained as in example 3. The crystal phase and binding capacity for hardness constituents in the final product treated under the same conditions as in example 4 were measured and are shown in the following table 1.

### Example 7—9

600 g of cullet powder (molar ratio 2.03) obtained by the same method as the above example 1, was pulverized, and then was divided into three groups of 200 g each. Distilled water of 20, 25, 30 % by weight was added to each group respectively. The crystal phase and binding capacity of hardness constituents in the final product obtained under the same conditions as in example 1 were measured and are shown respectively in the following table 1.

### Comparative example 1

The cullet powder only (molar ratio 2.03, particle size 43 - 185 μm, bulk density: 0.5 - 0.6 g/cm$^3$, ignition loss of 0.40 % by weight at 700 °C), obtained as in example 1, was calcined and crushed as in example 1, but without the step of forming granules. The crystal phase and binding capacity for hardness constituents in the resulting product are shown in the following table 1.

During the procedure, the product is melted and deposited within the apparatus and a large amount of dust is generated in the process of raw material addition. The friability of the product was high due to sintering phenomena. The resulting final product showed low binding capacity for hardness constituents and contained α-type or β-type as well as the δ-type.

### Comparative example 2

600 g of sand treated under the same conditions as in the above example 1 and 432.0 g of sodium carbonate are measured respectively and cullet (molar ratio 2.50) is obtained and treated under the same condition as in example 1.

The following table 1 shows crystal phase and binding capacity for hardness constituents of the final product which is obtained by calcination and crushing.

They showed low binding capacity for hardness constituents and the crystal phase contained a large amount of impurity phase of α—type or β—type as well as the δ—type.

Table 1.

| Index | The molar ratio of cullet ($SiO_2$/$Na_2O$) | Quantity of water to add (wt. %) | $Ca^{2+}$ [1] Exchanged quantity (mg $Ca^{2+}$/g) | $Mg^{2+}$ [2] Exchanged quantity (mg $Mg^{2+}$/g) | X-ray Diffraction [3] |
|---|---|---|---|---|---|
| Example 1 | 2.03 | 15 | 96.8 | 76.9 | $\delta$-$Na_2Si_2O_5$ crystallinity |
| Example 2 | 1.95 | 15 | 99.2 | 79.2 | $\delta$-$Na_2Si_2O_5$ crystallinity |
| Example 3 | 1.85 | 15 | 97.6 | 77.8 | $\delta$-$Na_2Si_2O_5$ crystallinity |
| Example 4 | 2.03 | 10 | 93.6 | 75.2 | Mainly $\delta$-$Na_2Si_2O_5$ crystallinity + trace amount of $\beta$-$Na_2Si_2O_5$ |
| Example 5 | 1.95 | 10 | 96.1 | 77.8 | Mainly $\delta$-$Na_2Si_2O_5$ crystallinity |
| Example 6 | 1.85 | 10 | 94.9 | 76.1 | Mainly $\delta$-$Na_2Si_2O_5$ crystallinity |

* Ion-exchange temperature: 25 °C (comment) (1) < Ca binding capacity measurement > About 1.0 g of sample is weighed, introduced into a stirrer maintained at 25 °C and then added to 1000 ml of hard water ($Ca^{2+}$ aqueous solution, hardness 200 mg $Ca^{2+}$/l). The mixture is stirred for 15 mins and quickly filtered and then 25 ml of filtrate is introduced into a 100 ml Erlenmeyer flask. 2 - 3 ml $NH_3$-$NH_4$Cl buffer solution of pH 10 is added.

The above solution is added to E. B. T. indicator and then is titrated with 0.01 M EDTA standard solution. The binding capacity of $Ca^{2+}$ was calculated by the following formula.

The binding capacity of

$$Ca^{2+}(\text{mg } Ca^{2+}/g) = \frac{(12.2\text{-}t)f}{W} \times \frac{200}{12.5}$$

herein, t: The consumed volume of EDTA (ml)
   W: The weight of reactants (g)
   f: 12.5/The consumed volume of EDTA in blank test.

(2) < Mg binding capacity measurement > About 1.0 g of sample is weighed, introduced into a stirrer maintained at 25 °C, and then added to 1000 ml of hard water ($Mg^{2+}$ aqueous solution, hardness 120 mg $Mg^{2+}$/l). The mixture is stirred for 15 mins and quickly filtered and then 25 ml of filtrate is introduced into a 100 ml Erlenmeyer flask, 0.5 ml of potassium cyanide solution (10 %), several drops of hydroxylchloride ammonium solution (%) and 2 - 3 ml $NH_3$-$NH_4$Cl buffer solution of pH 10 are added to the above solution. The solution is added to E. B. T. indicator, and then is titrated with 0.01 M EDTA standard solution. The binding capacity of $Mg^{2+}$ was calculated by following formula The binding capacity of

$$Mg^{2+}(\text{mg } Mg^{2+}/g) = \frac{(12.5\text{-}t)f}{W} \times \frac{200}{12.5}$$

herein, t: The consumed volume of EDTA (ml)
   W: The weight of sample (g)
   f: 12.5/The consumed volume of EDTA in blank test.

(3) < X-ray diffraction analysis > The X-ray diffraction analysis of the sample was performed using equipment of the Japan Rigaku Co. A Cu K$\alpha$ target and a Ni-filter were used and the sample was measured by a 15 mA, 35 kV power supply. The angle of rotation was 5 - 50 ° and the relative intensity was 5000 cps of count range.

The following table 2 shows X-ray diffraction data of a typical product of the present invention.

The following table 3 shows X-ray diffraction data of the product of the above example 1.

Table 1. (continued).

| Index | The molar ratio of cullet (SiO$_2$/Na$_2$O) | Quantity of water to add (wt. %) | Ca$^{2+}$ [1] Exchanged quantity (mg Ca$^{2+}$/g) | Mg$^{2+}$ [2] Exchanged quantity (mg Mg$^{2+}$/g) | X-ray Diffraction [3] |
|---|---|---|---|---|---|
| Example 7 | 2.03 | 20 | 97.3 | 76.7 | δ-Na$_2$Si$_2$O$_5$ crystallinity |
| Example 8 | 2.03 | 25 | 97.6 | 76.9 | δ-Na$_2$Si$_2$O5 crystallinity |
| Example 9 | 2.03 | 30 | 97.5 | 76.9 | δ-Na$_2$Si$_2$O$_5$ crystallinity |
| Comparative example 1 | 2.03 | 0 | 65.7 | 56.5 | α, β, δ-Na$_2$Si$_2$O$_5$ mixture formation |
| Comparative example 2 | 2.50 | 15 | 62.4 | 51.7 | α, β, δ-Na$_2$Si$_2$O$_5$ mixture formation |

* Ion-exchange temperature: 25 °C (comment) (1) < Ca binding capacity measurement > About 1.0 g of sample is weighed, introduced into a stirrer maintained at 25 °C and then added to 1000 ml of hard water (Ca$^{2+}$ aqueous solution, hardness 200 mg Ca$^{2+}$/l). The mixture is stirred for 15 mins and quickly filtered and then 25 ml of filtrate is introduced into a 100 ml Erlenmeyer flask. 2 - 3 ml NH$_3$-NH$_4$Cl buffer solution of pH 10 is added.

The above solution is added to E. B. T. indicator and then is titrated with 0.01 M EDTA standard solution. The binding capacity of Ca$^{2+}$ was calculated by the following formula.

The binding capacity of

$$Ca^{2+} (mg\ Ca^{2+}/g) = \frac{(12.2\text{-}t)f}{W} \times \frac{200}{12.5}$$

herein, t: The consumed volume of EDTA (ml)
W: The weight of reactants (g)
f: 12.5/The consumed volume of EDTA in blank test.

(2) < Mg binding capacity measurement > About 1.0 g of sample is weighed, introduced into a stirrer maintained at 25 °C, and then added to 1000 ml of hard water (Mg$^{2+}$ aqueous solution, hardness 120 mg Mg$^{2+}$/l). The mixture is stirred for 15 mins and quickly filtered and then 25 ml of filtrate is introduced into a 100 ml Erlenmeyer flask, 0.5 ml of potassium cyanide solution (10 %), several drops of hydroxylchloride ammonium solution (%) and 2 - 3 ml NH$_3$-NH$_4$Cl buffer solution of pH 10 are added to the above solution. The solution is added to E. B. T. indicator, and then is titrated with 0.01 M EDTA standard solution. The binding capacity of Mg$^{2+}$ was calculated by following formula The binding capacity of

$$Mg^{2+} (mg\ Mg^{2+}/g) = \frac{(12.5\text{-}t)f}{W} \times \frac{200}{12.5}$$

herein, t: The consumed volume of EDTA (ml)
W: The weight of sample (g)
f: 12.5/The consumed volume of EDTA in blank test.

(3) < X-ray diffraction analysis > The X-ray diffraction analysis of the sample was performed using equipment of the Japan Rigaku Co. A Cu Kα target and a Ni-filter were used and the sample was measured by a 15 mA, 35 kV power supply. The angle of rotation was 5 - 50 ° and the relative intensity was 5000 cps of count range. The following table 2 shows X-ray diffraction data of a typical product of the present invention.

The following table 3 shows X-ray diffraction data of the product of the above example 1.

Table 2.

| X-ray diffraction characteristic values of sample according to the present invention | |
|---|---|
| d- space ($10^{-8}$ cm) | Relative Intensity |
| 6.88 (±0.06) | W |
| 4.90 (±0.05) | W |
| 3.93 (±0.07 | Vs |
| 3.78 (±0.05) | S |
| 3.44 (±0.05) | W |
| 3.02 (±0.06) | M |
| 2.72 (±0.05) | W |
| 2.53 (±0.06) | W |
| 2.42 (±0.06) | M |
| 2.09 (±0.05) | W |
| 1.98 (±0.07) | W |
| 1.84 (±0.05) | W |
| (COMMENT) * The table 2 indicates the following:<br>very strong when relative intensity is in the range of 75 to 100 (vs: very strong), strong when 50 to 74 (s: strong), medium when 24 to 49 (m: medium) weak when 0 to 24 (w: weak) | |

Table 3.

| X-ray diffraction characteristic values of the final product according to example 1 | | |
|---|---|---|
| 2-THETA | d-SPACE ($10^{-8}$cm) | Relative Intensity |
| 12.79 | 6.91 | 5 |
| 14.59 | 6.07 | 12 |
| 17.98 | 4.93 | 13 |
| 21.10 | 4.21 | 13 |
| 22.36 | 3.97 | 100 |
| 22.97 | 3.87 | 9 |
| 23.45 | 3.79 | 55 |
| 24.45 | 3.64 | 10 |
| 25.80 | 3.45 | 10 |
| 26.87 | 3.31 | 13 |
| 28.74 | 3.10 | 7 |
| 29.50 | 3.03 | 22 |
| 30.71 | 2.91 | 9 |
| 31.41 | 2.84 | 14 |
| 32.79 | 2.73 | 6 |
| 34.92 | 2.56 | 7 |
| 35.29 | 2.54 | 7 |
| 35.96 | 2.49 | 10 |
| 37.01 | 2.42 | 38 |
| 43.07 | 2.10 | 17 |
| 43.73 | 2.07 | 5 |
| 44.53 | 2.01 | 4 |
| 47.27 | 1.92 | 5 |
| 48.24 | 1.87 | 7 |
| 48.92 | 1.86 | 5 |
| 49.81 | 1.83 | 5 |
| 49.16 | 1.82 | 7 |

As we confirmed in the above table 2 and 3, the layered crystalline sodium disilicate of the present invention corresponded to d-spacing value of 2.42, 3.78. 3.93, 6.88 of main characteristic value assigned δ-type layered crystalline sodium disilicate as defined by JCPDS (Joint Committee on Powder Diffraction Standard, 22-1396) of U.S.A. Therefore, we can know that the final product of the present invention consists of $\delta$-type.

**Claims**

1.  A process for preparing a $\delta$ layered sodium disilicate **characterized by** comprising the following steps:

    a) preparing cullet having a molar ratio of $SiO_2$ to $Na_2O$ of 1.8 : 1 to 2.2 : 1 followed by pulverizing said cullet so as to obtain a powder having a particle size of 40 - 200 $\mu$m,
    b) adding water in an amount of 10.0 to 30.0 wt-% to said powder form and mixing them,
    c) granulating the resultant mixture to sizes of 1 to 50 mm, and
    d) directly calcining and crushing the granules.

2.  The process as claimed in claim 1, wherein said granules are calcined at temperature of 650 to 770 °C for 20 min to 1 hour to crystallize.

3.  A layered sodium disilicate prepared according to claim 1 having a $\delta$-crystalline structure, a calcium ion binding capacity 87.0 mg to 105.0 mg $Ca^{2+}$/g, and a magnesium ion binding capacity 73.0 mg to 85.0 mg $Mg^{2+}$/g at 25 °C.

**Patentansprüche**

1.  Verfahren zur Herstellung eines $\delta$-geschichteten Natriumdisilikats , **dadurch gekennzeichnet, daß** es die folgenden Stufen umfaßt:

    a) Herstellen eines Bruchs mit einem molaren Verhältnis von $SiO_2$ zu $Na_2O$ von 1,8 : 1 bis 2,2 : 1, gefolgt von dem Pulverisieren des Bruchs, so daß man ein Pulver mit einer Teilchengröße von 40 bis 200 $\mu$m erhält,
    b) Zugeben von Wasser in einer Menge von 10,0 bis 30,0 Gew.-% zu der Pulverform und Mischen derselben,
    c) Granulieren des erhaltenen Gemisches auf Größen von 1 bis 50 mm und
    d) direktes Calcinieren und Zerkleinern des Granulates.

2.  Verfahren nach Anspruch 1, wobei das Granulat zum Kristallisieren bei einer Temperatur von 650 bis 770 °C für 20 Minuten bis 1 Stunde calciniert wird.

3.  Geschichtetes Natriumdisilikat, hergestellt nach Anspruch1, mit einer $\delta$-kristallinen Struktur, einer Calciumionenbindungskapazität von 87,0 mg bis 105,0 mg $Ca^{2+}$/g und einer Magnesiumionenbindungskapazität von 73,0 mg bis 85,0 mg $Mg^{2+}$/g bei 25 °C.

**Revendications**

1.  Procédé de préparation d'un $\delta$ disilicate de sodium en couches **caractérisé en ce qu'**il comprend les étapes suivantes consistant à :

    a) préparer un calcin présentant un rapport molaire de $SiO_2$ à $NaO_2$ de 1,8/1 à 2,2/1 suivi de la pulvérisation dudit calcin de façon à obtenir une poudre présentant une dimension de particules de 40 à 200 $\mu$m,
    b) ajouter de l'eau dans une quantité de 10,0 à 30,0 % en poids à ladite poudre formée et effectuer le mélange,
    c) granuler le mélange résultant jusqu'à des dimensions de 1 à 50 mm, et
    d) calciner directement et broyer les granules.

2.  Procédé selon la revendication 1, dans lequel lesdits granules sont calcinés à la température de 650 à 770°C pendant 20 minutes à 1 heure pour réaliser la cristallisation.

3.  Disilicate de sodium $\delta$ en couches préparé selon la revendication 1 présentant une structure cristalline $\delta$, une capacité de liaison à l'ion calcium de 87,0 mg à105,0 mg $Ca^{2+}$/g, et une capacité de liaison à l'ion magnésium de 73,0 mg à 85,0 mg $Mg^{2+}$/g à 25°C.

# Fig. 1

EP 0 745 559 B1

Cullet powder
molar ratio:1.85~2.03 → Hydrolysis (10.0~30.0 weight%) → Granules → Calcination δ-type → Crushing

# Fig. 2

EP 0 745 559 B1

# Fig. 3

EP 0 745 559 B1

```
                          ┌─────────────────────────┐
                          │  Final product recovery  │
                          └─────────────────────────┘
┌──────────────────────┐      ┌──────────────────┐      ┌──────────┐
│ Cullet powder        │────▶ │ Calcination(△)   │────▶ │ Crushing │
│ molar ratio:2.0~3.5  │      └──────────────────┘      └──────────┘
└──────────────────────┘            α-type
```

Fig. 4